# NEUE EUROPÄISCHE PATENTSCHRIFT

(11) **EP 1 269 143 B2**
(45) Veröffentlichungstag und Bekanntmachung des Hinweises auf die Entscheidung über den Einspruch: **07.09.2016**
(45) Hinweis auf die Patenterteilung: 31.10.2007
(21) Anmeldenummer: 00967684.2
(22) Anmeldetag: 15.09.2000
(51) Int. Cl.: G01N 1/28, G01N 1/04, G02B 21/26

(54) **AUFFANGVORRICHTUNG ZUM AUFFANGEN VON INSBESONDERE MITTELS LASERBESTRAHLUNG AUS EINER MASSE HERAUSGELÖSTEN OBJEKTEN**
COLLECTING DEVICE FOR COLLECTING OBJECTS THAT ARE DISSOLVED OUT OF A MASS, ESPECIALLY BY MEANS OF LASER RADIATION
DISPOSITIF COLLECTEUR DESTINE A RECUEILLIR DES OBJETS DISSOUS DANS UN PRODUIT, EN PARTICULIER PAR RAYONNEMENT LASER

(30) Priorität: 27.03.2000 DE 10015157
(43) Veröffentlichungstag der Anmeldung: 02.01.2003
(73) Patentinhaber: P.A.L.M. Microlaser Technologies AG, 82347 Bernried (DE)
(72) Erfinder: SCHÜTZE, Karin, 82327 Tutzing (DE); SCHÜTZE, Raimund, 82327 Tutzing (DE)
(74) Vertreter: Banzer, Hans-Jörg
(86) Internationale Anmeldenummer: PCT/EP2000/009073
(87) Internationale Veröffentlichungsnummer: WO 2001/073397

(56) Entgegenhaltungen:
- WO-A-97/29355
- WO-A-99/39176
- WO-A1-01/79911
- WO-A1-97/29354
- DE-A- 19 739 445
- DE-U- 29 800 790
- GOLDSTEIN S R ET AL: "AN INSTRUMENT FOR PERFORMING LASER CAPTURE MICRODISSECTION OF SINGLE CELLS" REVIEW OF SCIENTIFIC INSTRUMENTS, US, AMERICAN INSTITUTE OF PHYSICS. NEW YORK, Bd. 70, Nr. 11, November 1999 (1999-11), Seiten 4377-4385, XP000885106 ISSN: 0034-6748
- Einladung "EuroConference Microdissection and its Downstream Tools", Bonn, 15.-17. September 2000
- Prospekt "Leica AS LMD" zum Leica-Laser-Mikrodissektionsgerät Veröffentlichung: VI/00, ALSO juni 2000
- Fotos (Bilder 1-11) des Mikroskops "Leica AS LMD"
- ANLAGENKONVOLUT RECHNUNG UND DOKUMENTATION VERTRIEB DEUTSCHLAND
- ANLAGENKONVOLUT RECHNUNG UND DOKUMENTATION VERTRIEB NIEDERLANDE
- SCHÜTZE K. ET AL: 'Identification of expressed genes by laser-mediated manipulation of single cells' NATURE BIOTECHNOLOGY Bd. 16, August 1998, Seiten 737 - 742
- Dr. Karin Schütze, P.A.L.M. GmbH, "Specimen Preparation for Laser Microdissection", Veröffentlichung: 10/99
- Kopie eines Buchungsvorgangs der Leica Mikrosysteme Vertrieb GmbH
- Screenshots einer E-Mailkorrespondenz von Herrn Cavel.
- Programm der "Euro Conference Microdissection and its Downstream Tools2, Bonn, 15-17 September 2000
- Prüfbericht von Dr. A. Weiß vom 07.08.00

## Beschreibung

Die vorliegende Erfindung betrifft eine Auffangvorrichtung zum Auffangen bzw. Sammeln von aus einer auf einem Träger befindlichen Masse herausgelösten biologischen oder nicht biologischen Objekten nach dem Oberbegriff des Anspruchs 1. Insbesondere betrifft die vorliegende Erfindung eine derartige Auffangvorrichtung, mit deren Hilfe aus einer biologischen Masse mittels Laserbestrahlung herausgeschnittene und/oder herauskatapultierte biologische oder nicht biologische Objekte aufgefangen werden können.

Zur Separierung einzelner Zellen aus einergroßen Zahl von in einer Flüssigkeit dispergierten biologischen Objekten sind geeignete Trenn- bzw. Sortiervorrichtungen kommerziell erhältlich. Während bei der Fluoreszenz-aktivierten Zellsortierung ("Fluorescence Activated Cell Sorter", FACS) elektrostatische Prinzipien zur räumlichen Separierung zum Einsatz kommen, wird bei der magnetisch aktivierten Zellsortierung ("Magnetic Activated Cell Sorter, MACS) mit magnetischen Kräften gearbeitet. Hierbei liegen die Zellen jedoch nicht auf einem planaren Träger, sondern nebeneinander. Überdies haben beide Methoden den Nachteil, dass sich manche Objekte nur eingeschränkt (FACS) oder überhaupt nicht (MACS) getrennt voneinander absondern lassen.

Die zuvor beschriebenen Methoden können keine einzelnen Zellen aus einem Zellverhand, wie beispielsweise einem Gewebe oder einem histologischen Gewebepräparat, lösen.

In der WO 97/29355 Ader Anmelderin, welche eine Auffangvorrichtung gemäß dem Oberbegriff des Anspruches 1 offenbart, wird daher ein neuartiges Verfahren zur Sortierung und zur Gewinnung von einzelnen biologischen Objekten, die auf einem planaren Träger angeordnet sind, vorgeschlagen. Insbesondere wird in dieser Druckschrift vorgeschlagen, ein selektiertes biologisches Objekt von der umgebenden weiteren biologischen Masse durch einen Laserstrahl abzutrennen, so dass das selektierte biologische Objekt von derweiteren biologischen Masse frei präpariert ist. Das somit frei präparierte biologische Objekt wird anschließend mit Hilfe eines Laserschusses von dem Träger zu einer Auffangvorrichtung katapultiert, wo es beispielsweise von einem topfförmigen Behälter ("Cap") aufgefangen und gehalten wird. Ebenso ist es möglich, das selektierte biologische Objekt direkt aus der umgebenden biologischen Masse mit Hilfe eines einzigen Laserschusses zu der Auffangvorrichtung zu katapultieren, so dass eine separate Laserbestrahlung zum Herausschneiden des gewünschten biologischen Objekts nicht erforderlich ist.

Unter "biologischen Objekten" werden allgemein im Rahmen der vorliegenden Patentanmeldung v.a. lebende oder fixierte biologische Zellen oder Zellbestandteile verstanden, die Bestandteil eines flüssigen oder festen biologischen Materials, wie beispielsweise eines Zellgewebes, eines Abstriches oder einer Zellkultur etc. sind. Das zuvor beschriebene Verfahren ist jedoch ebenso für nicht biologische Objekte (unbelebte Materie) anwendbar, wobei es sich beispielsweise um mikroskopisch kleine Objekte aus Glas, Silica, Kunststoff etc. oder um künstlich hergestellte Vesikel usw. in der biologischen Masse handeln kann. Die vorliegende Erfindung wird jedoch nachfolgend anhand des bevorzugten Anwendungsbereichs der Bearbeitung biologischer Objekte beschrieben, ohne darauf beschränkt zu sein.

Wie bereits erwähnt worden ist, kann zum Auffangen bzw. Sammeln der mittels Laserbestrahlung aus derentsprechenden biologischen Masse herauskatapultierten Objekte ein topfförmiges Auffanggefäß ("Cap") verwendet werden. Ebenso ist die Verwendung eines Auffangsubstrats, an dem die herauskatapultierten Objekte haften bleiben, oder dgl. denkbar. Unabhängig davon, welches Auffangmittel tatsächlich verwendet wird, ist in jedem Fall eine möglichst exakte Positionierung des jeweiligen Auffangmittels gegenüber der entsprechenden mittels Laserbestrahlung bearbeiteten Stelle der biologischen Masse erforderlich. Dasselbe gilt auch dann, wenn die biologischen Objekte nicht mittels Laserbestrahlung aus der biologischen Masse herauskatapultiert, sondern lediglich mittels Laserbestrahlung herausgeschnitten werden, aufgrund ihrer Gewichtskraft von dem jeweiligen Träger herunterfallen und mit Hilfe eines geeigneten Auffangmittels aufgefangen werden müssen. Auch in diesem Fall muss das Auffangmittel unterhalb der jeweiligen Bearbeitungsstelle der biologischen Masse möglichst genau positioniert werden.

Gemäß dem Stand der Technik sind hierzu Auffangvorrichtungen bekannt, welche ober- oder unterhalb des Trägertisches eines entsprechenden Laser-Mikroskop-Systems anbringbar sind, und in x-, y- und z-Richtung verfahren werden können. Das Verfahren der Auffangvorrichtung bzw. der Halterung für das jeweilige Auffangmittel erfolgt dabei manuell. Dies hat jedoch zur Folge, dass die Auffangvorrichtung nicht mit der erforderlichen Präzision positioniert werden kann. Eine ausreichend genaue Positionierung der Auffangvorrichtung ist allenfalls mit erheblichem Aufwand möglich.

Aus der DE 197 30 445 A1 und DE 198 00 790 U1 sind Beispiele für Aufnahmeeinheiten als Träger für lösbare Behälter für biologische Objekte bekannt.

Der vorliegenden Erfindung liegt die Aufgabe zugrunde, eine Auffangvorrichtung zum Auffangen von aus einer biologischen oder nicht biologischen Masse herausgelösten Objekten bereitzustellen, welche eine möglichst präzise Positionierung der Auffangvorrichtung bzw. des jeweils verwendeten Auffangmittels mit möglichst geringem Aufwand ermöglicht.

Diese Aufgabe wird erfindungsgemäß durch eine Auffangvorrichtung mit den Merkmalen des Anspruchs 1 gelöst. Die Unteransprüche definieren jeweils bevorzugte und vorteilhafte Ausführungsformen der vorliegenden Erfindung.

Die erfindungsgemäße Auffangvorrichtung umfasst eine Aufnahmeeinheit, welche zur Aufnahme einer Vielzahl von Auffangmitteln ausgestaltet ist. Als Auffangmittel kann dabei insbesondere die Kappe ("Cap") eines sogenannten Eppendorf- oder Mikrozentrifugenbehälters verwendet werden, welcher von der zuvor beschriebenen Aufnahmeeinheit gehalten wird. Zum Verstellen der Aufnahmeeinheit bzw. von zum Halten derselben vorhandenen Haltemitteln sind Verstellmittel vorgesehen, welche von Steuermitteln angesteuert werden, um in Abhängigkeit von Verstellsignalen, welche von den Steuermitteln erzeugt werden, die Haltemittel bzw. die Aufnahmeeinheit entsprechend zu verstellen und somit die Aufnahmeeinheit mit dem Auffangmittel auf gewünschte Weise zu positionieren. Die Aufnahmeeinheit ist von den Haltemitteln abnehmbar. Es sind Erkennungsmittel zum Erkennen der Lage der einzelnen Auffangmittel in einer Arbeitsposition vorgesehen.

Das Positionieren des Auffangmittels erfolgt somit computer- oder rechnergesteuert und mit hoher Präzision.

Die Verstellmittel sind vorzugsweise derart ausgestaltet, dass sie die Aufnahmeeinheit mit dem davon gehaltenen Auffangmittel von einerBestückungsposition in eine Arbeitsposition und umgekehrt schwenken können. Des weiteren sind die Verstellmittel vorzugsweise derart ausgestaltet, dass auch in der Arbeitsposition, in welcher das Auffangmittel mit dem Mikroskop des entsprechenden Laser-Mikroskop-Systems beobachtbar ist, eine Verstellung der Haltemittel bzw. der davon gehaltenen Aufnahmeeinheit mit dem Auffangmittel parallel zur Trägerebene möglich ist, um durch Betrachtung mit dem Mikroskop ein in dem Auffangmittel befindliches biologisches oder nicht biologisches Objekt, welches zuvor aus der in der Trägerebene befindlichen Masse herausgelöst worden ist, zu beobachten. Auf diese Weise kann mit Hilfe der Auffangvorrichtung nicht nur ein aus der Masse herausgelöstes Objekt aufgefangen, sondern auch zum Auffinden bestimmter Merkmale dieses Objekts genauer untersucht werden, ohne dass hierzu eine separate Vorrichtung erforderlich ist. Für das Auffangmittel ist vorzugsweise eine Nullposition definiert, wobei die Verstellmittel und/oder die Steuermittel derart ausgestaltet sind, dass nach einer Verstellung der Haltemittel bzw. der Aufnahmeeinheit mit dem Auffangmittel in x- oder y-Richtung, welche zum Beobachten eines in dem Auffangmittel befindlichen Objekts durchgeführt wird, eine automatische Rückstellung in die vordefinierte Nullposition möglich ist, so dass auch nach Abfahren des in dem Auffangmittel befindlichen Objekts automatisch die ursprüngliche Nullposition wieder angenommen werden kann.

Die Aufnahmeeinheit ist zur Aufnahme einer Vielzahl von Auffangmitteln ausgestaltet. Dabei hat es sich insbesondere als vorteilhaft herausgestellt, wenn als Aufnahmeeinheit ein scheibenförmiges, insbesondere kreisförmiges, Medium mit mehreren in Umfangsrichtung dieses Mediums verteilten Öffnungen zur Aufnahme von Auffangmitteln verwendet wird. Die Verstellmittel können einen Schwenkantrieb zum Verschwenken der Aufnahmeeinheit zwischen der zuvor genannten Bestückungsposition und der Arbeitsposition sowie einen Drehantrieb zum Positionieren des jeweils gewünschten Auffangmittels umfassen. Der Drehantrieb kann zusammen mit einem weiteren in der Arbeitsposition wirksamen Verstellmechanismus zugleich zum Abfahren eines in einem Aufnahmemittel gehaltenen Objekts verwendet werden. Durch an der Aufnahmeeinheit angebrachte Markierungen kann die Nullposition jedes Auffangmittels auch nach Verstellen eines Auffangmittels in x- und y-Richtung automatisch wieder aufgefunden werden. Im Prinzip reicht hierzu auch lediglich das Anbringen einer einzigen Markierung an der Aufnahmeeinheit aus, da sich die einzelnen Öffnungen für die Auffangmittel bzw. die einzelnen Auffangmittel zueinander in einer vordefinierten Lage befinden.

Die Verwendung einer derartigen Aufnahmeeinheit mit einer Vielzahl von Auffangmitteln ermöglicht ein rasches Herauslösen mehrer biologischer oder nicht biologischer Objekte nacheinander aus der zu bearbeitenden Masse, wobei jeweils ein Objekt von einem entsprechenden Auffangmittel aufgefangen wird. Die einzelnen Auffangmittel können rechnergestützt nacheinanderin rascher Abfolge überdiezu bearbeitende Masse gefahren werden, wobei jeweils ein Objekt beispielsweise durch Katapultieren mittels eines Laserschusses in das entsprechende Auffangmittel befördert wird. Dabei kann diese rechnergestützte Verstellung der Auffangvorrichtung bzw. deren Aufnahmeeinheit mit den darin gehaltenen Auffangmitteln mit einer ebenfalls rechnergestützten Laserbestrahlung der Masse kombiniert werden, so dass zuvor selektierte Objekte der Masse vollautomatisch nacheinander aus der Masse herausgelöst und jeweils einzeln in die entsprechenden Auffangmittel befördert werden.

Obwohl die vorliegende Erfindung im Rahmen der vorliegenden Patentanmeldung anhand des bevorzugten Anwendungsfalls des Herauskatapultierens von biologischen oder nicht biologischen Objekten aus einer biologischen Masse mittels Laserbestrahlung erläutert wird, ist zu beachten, dass im Prinzip die vorliegende Erfindung auch auf Systeme anwendbar ist, bei denen sich die Auffangvorrichtung unterhalb des Objektträgers befindet und bei denen die biologischen oder nicht biologischen Objekte mittels Laserbestrahlung lediglich aus der umgebenden biologischen Masse herausgeschnitten werden und allein aufgrund ihrer Gewichtskraft nach unten in die Auffangvorrichtung bzw. die entsprechenden Auffangmittel fallen. Ebenso kann die vorliegende Erfindung auch auf nicht biologische Massen, z.B. Polymermassen etc., angewendet werden, aus denen mittels Laserbestrahlung oder dgl. einzelne Objekte herausgelöst werden können. Schließlich ist die Verwendung der vorliegenden Erfindung auch für Fälle denkbar, bei denen die aufzufangenden mikroskopisch kleinen Objekte nicht mittels Laserbestrahlung, sondern auf irgendeine andere Weise aus der auf dem Träger befindlichen umgebenden Masse herausgelöst werden.

Die vorliegende Erfindung wird nachfolgend näher unter Bezugnahme auf die beigefügte Zeichnung anhand bevorzugter Ausführungsbeispiele erläutert.
Figur 1 zeigt den grundsätzlichen Aufbau eines Laser-Mikroskop-Systems, in dem die erfindungsgemäße Auffangvorrichtung eingesetzt werden kann,
Figur 2 zeigt eine Draufsicht auf eine Auffangvorrichtung gemäß einem Ausführungsbeispiel der vorliegenden Erfindung,
Figur 3 zeigt eine perspektivische Ansicht einer weiteren Auffangvorrichtung, bei welcher es sich nicht um ein Ausführungsbeispiel der Erfindung handelt, und
Figur 4 - Figur 6 zeigen perspektivische Ansichten noch einer weiteren Auffangvorrichtung, bei welcher es sich nicht um ein Ausführungsbeispiel der Erfindung handelt.

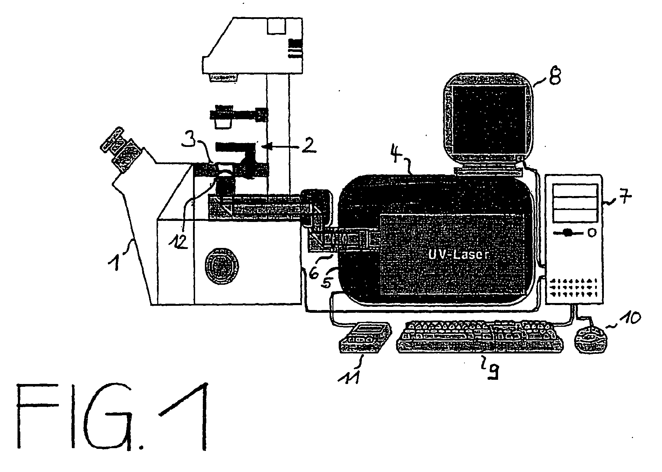

in Figur 1 ist der Aufbau eines Laser-Mikroskop-Systems dargestellt, wie es zur Verwendung einer erfindungsgemäßen Auffangvorrichtung eingesetzt werden kann. Das System ist modular aufgebaut und kann somit an unterschiedliche experimentelle Anforderungen individuell angepasst werden.

Das in Figur 1 gezeigte System umfasst eine Laservorrichtung 4, in welcher eine Laserlichtquelle zur Erzeugung eines Laserlichtstrahls untergebracht ist. Des weiteren ist in der Laservorrichtung 4 eine Optik 5, 6 untergebracht, welche erforderlich ist, um den Laserstrahl in ein Mikroskop 1 einzukoppeln und den Laserfokus in der Objektebene auf den optischen Fokus des Mikroskops 1 abzustimmen. Im vorliegenden Fall kann es sich um einen gepulsten UV-Stickstofflaser mit einer Wellenlänge von 337 nm und einer Impulsenergie von ca. 270 µJ handeln, wobei die Impulsdauer 3 ms und die Impulsfrequenz 1-30 Impulse pro Sekunde betragen kann. Zur Steuerung der Laservorrichtung 4 kann ein Steuerpaneel vorgesehen sein, mit dessen Hilfe die Laserenergie und/ oder der Laserfokus auf gewünschte Werte eingestellt werden kann. Der Stickstofflaser emittiert einen Laserstrahl mit einer festen Laserenergie. Zur präzisen Verstellung der Laserenergie ist ein Quarzfilter 5 senkrecht zum Laserstrahlpfad angeordnet, dessen Lage in Abhängigkeit von der am Steuerpaneel vorgenommenen Einstellung gesteuert werden kann, um somit die Laserenergie entsprechend einzustellen. Die Verstellung des Quarzfilters 5 kann dabei automatisch oder manuell erfolgen. Neben der Einstellung der Laserenergie kann auch der Laserfokus unabhängig von dem Mikroskopfokus eingestellt werden, d.h. der Brennpunkt des Lasers kann in z-Richtung relativ zur Objektebene des Mikroskops 1 verschoben werden. Auch der Laserfokus kann in Abhängigkeit von der am Steuerpaneel vorgenommenen Einstellung sowohl automatisch als auch manuell durch eine entsprechende Bewegung der Linsen 6 verstellt werden. Vorzugsweise kann über das erwähnte Steuerpaneel auch die Impulsrate des Lasers eingestellt werden, wobei zudem eine Anzeige über die am Steuerpaneel vorgenommenen Einstellungen informiert.

Der Laserstrahl wird über mehrere beschichtete Strahlteiler in das Mikroskop 1 eingekoppelt und zu einem Objektiv 12 hin abgelenkt. Der über das Objektiv 12 emittierte Laserstrahl trifft schließlich auf einen motorisierten und computergesteuerten Mikroskop- oder Trägertisch 3, auf dem ein Objektträger mit einer zu bearbeitenden biologischen Masse angeordnet ist. Oberhalb des Trägertisches 3 befindet sich eine ebenfalls motorisierte und vorzugsweise computergesteuerte Auffangvorrichtung 2. Die Komponenten 2 und 3 ermöglichen eine exakte Objektpositionierung mit Nanometer-Präzision sowie ein präzises Auffangen von biologischen oder nicht biologischen Objekten, welche mittels Laserbestrahlung von der auf dem Trägertisch 3 befindlichen Masse nach oben herauskatapultiert werden.

Bei dem Mikroskop 1 kann es sich um ein beliebig ausgestaltetes Mikroskop handeln. Insbesondere ist grundsätzlich sowohl die Verwendung eines inversen als auch eines aufrechten Mikroskops oder eines Lasermikroskops denkbar. Das Mikroskop 1 ist mit einer Videokamera, insbesondere einer CCD-Videokamera ("Charge Coupled Device"), ausgestattet, welche den Bereich des Objektträgers bzw. Trägertisches 3 oberhalb des Objektivs 12 aufnimmt. Das Videosignal dieser Videokamera wird einem handelsüblichen Computer ("Personal Computer") 7 zugeführt und dort mit einer sogenannten Frame Grabber-Karte verarbeitet, so dass das entsprechende Videobild in Echtzeit auf dem Bildschirm oder Monitor 8 des Computers 7 dargestellt werden kann. Ebenso ist ein Speichern einzelner Videobilder auf einem Speichermedium des Computers 7 möglich. Des weiteren kann mit dem Computer 7 auch ein analoger oder digitaler Videorekorder zum Aufzeichnen der von der Videokamera gelieferten Videobilder gekoppelt sein.

Auf dem Computer 7 bzw. der darauf ablaufenden Software sind verschiedene Funktionen implementiert, welche sowohl eine rechnergestützte, d.h. automatische, Ansteuerung der Laservorrichtung 4 als auch des Mikroskops 1 bzw. des Trägertisches 3 und der Auffangvorrichtung 2 ermöglichen, so dass beispielsweise der Laser automatisch aktiviert wird und die Auffangvorrichtung 2 sowie der Trägertisch 3 automatisch verfahren und verstellt werden können. Zur Einstellung bzw. Auswahl dieser Funktionen sind herkömmliche Eingabemittel, wie beispielsweise eine Tastatur 9, eine Computermaus 10 oder ein (nicht gezeigter) Trackball, Joystick oder dgl. vorgesehen.

Des weiteren ist der Laservorrichtung 4 ein Fußschalter 11 zugeordnet, durch dessen Betätigung der Laser manuell aktiviert werden kann.

Zum Schneiden der auf dem Objektträger bzw. dem Trägertisch 3 befindlichen biologischen Masse kann der Benutzer rechnergestützt eine geeignete Schnittlinie vorgeben, die durch entsprechende Ansteuerung der Laservorrichtung 4 und des Trägertisches 3 in eine entsprechende Relativbewegung zwischen dem Laserstrahl und dem Trägertisch 3 umgesetzt wird, so dass bei gleichzeitiger Aktivierung der Laservorrichtung 4 die biologische Masse entsprechend der vorgegebenen Schnittlinie mittels des Laserstrahls geschnitten wird. Ebenso ist es möglich, beispielsweise eine Bewegung der Computermaus 10 direkt in eine entsprechende Bewegung des Trägertisches 3 umzusetzen, so dass bei gleichzeitiger Aktivierung der Laservorrichtung 4 auch manuell geschnitten werden kann. Es ist zu beachten, dass vor einem Schneidevorgang die Laserleistung und/oder der Laserfokus in Abhängigkeit von der zu bearbeitenden Probe entsprechend eingestellt werden muss. Dies kann, wie bereits zuvor erläutert worden ist, über das Steuerpaneel der Laservorrichtung 4 oder auch rechnergestützt erfolgen.

Ein auf diese Weise aus der biologischen Masse ausgeschnittenes biologisches oder nicht biologisches Objekt kann mit Hilfe einer weiteren Laserbestrahlung aus der biologischen Masse zu der darüber befindlichen Auffangvorrichtung 2 katapultiert werden. Zu diesem Zweck können die zu katapultierenden Objekte der biologischen Masse rechnergestützt definiert bzw. markiert und anschließend der Trägertisch 3 automatisch derart verstellt werden, dass die zu katapultierenden Objekte automatisch nacheinander über den Laserstrahl bewegt und durch Setzen eines kurzen Laserschusses jeweils aus der Objektebene zu der Auffangvorrichtung 2 katapultiert werden. Hierzu muss die Laserenergie gegenüber der zum Schneiden verwendeten Laserenergie manuell oder automatisch erhöht und/oder der Laserstrahl gegenüber dem zum Schneiden verwendeten Laserstrahl manuell oder automatisch defokussiert werden, um den angestrebten Photoneneffekt zu erhalten, der zum Herausschleudern des gewünschten Objekts führt. Die einzelnen Laserimpulse oder Laserschüsse können computergestützt vollautomatisch in Abhängigkeit von der Verstellung des Trägertisches 3 erzeugt werden. Ebenso kann ein einzelner Laserimpuls oder Laserschuss durch einen kurzen Druck auf den in Figur 1 gezeigten Fußschalter 11 ausgelöst werden.

Für das Katapultieren ausgewählter Objekte ist es nicht unbedingt erforderlich, dass diese zuvor aus der umgebenden biologischen Masse herausgeschnitten worden sind. Vielmehr haben Untersuchungen ergeben, dass es grundsätzlich auch möglich ist, durch eine entsprechende Laserbestrahlung einzelne Objekte direkt aus der umgebenden biologischen Masse herauszukatapultieren, wenn die Laserenergie und/oder der Laserfokus entsprechend eingestellt werden.

Die Auffangvorrichtung 2, welche sich bei dem in Figur 1 dargestellten System oberhalb des Trägertisches 3 bzw. der Objektebene befindet, weist ein oder mehrere Auffangmittel auf, welche ein von der Objektebene herauskatapultiertes Objekt festhalten. Durch Fokussierung des Mikroskops 1 auf die Auffangvorrichtung 2 bzw. das jeweils im Lichtpfad des Mikroskops 1 befindliche Auffangmittel dieser Auffangvorrichtung 2 kann anschließend über das Mikroskop 1 bzw. den Bildschirm 8 des Computers 7 das herauskatapultierte und von den entsprechenden Auffangmitteln gehaltene biologische oder nicht biologische Objekt betrachtet und untersucht werden, wobei zu diesem Zweck vorzugsweise eine Verstellmöglichkeit zur Verstellung der Auffangvorrichtung 2 parallel zur Objektebene vorgesehen ist, um das herauskatapultierte Objekt mit dem Mikroskop abfahren zu können.

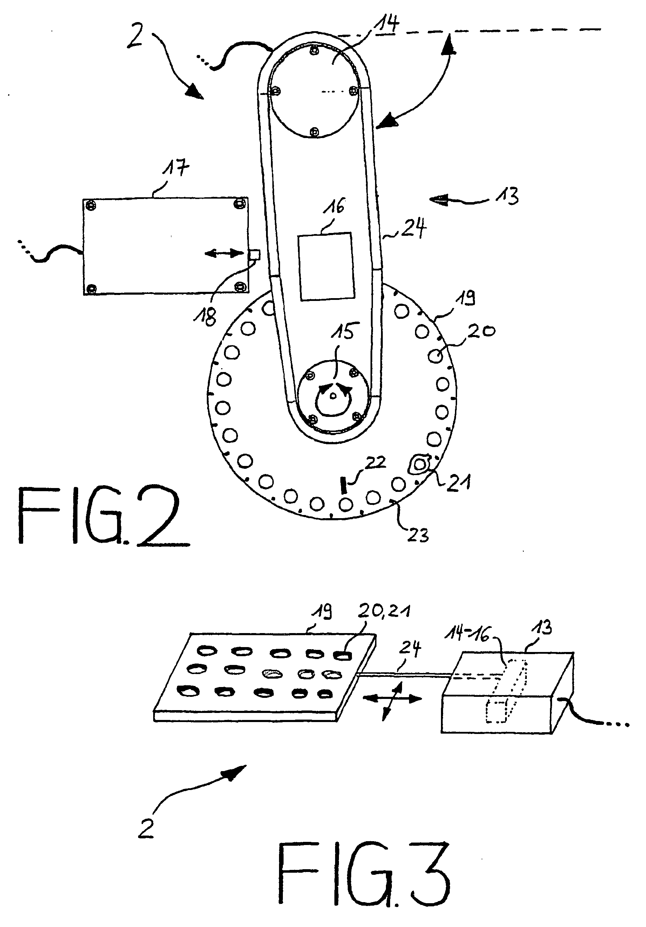

In Figur 2 ist ein Ausführungsbeispiel für die in Figur 1 dargestellte Auffangvorrichtung 2 gezeigt, welches eine vollautomatische Positionierung eines Auffangmittels über dem jeweils aus der Objektebene herauszukatapultierenden Objekt ermöglicht. Insbesondere ist dieses Ausführungsbeispiel derart ausgestaltet, dass rechnergestützt nacheinander eine Vielzahl von biologischen oder nicht biologischen Objekten aus der Objektebene herauskatapultiert und jeweils von entsprechenden Auffangmitteln gefangen werden, so dass jeweils ein herauskatapultiertes Objekt von einem Auffangmittel gehalten wird. Da auf diese Weise jedes herauskatapultierte Objektgenau einem Auffangmittel zugeordnet ist, können die einzelnen Objekte später wieder leichter aufgefunden und betrachtet werden.

Das in Figur 2 gezeigte Ausführungsbeispiel umfasst eine Halterung 24 für eine Aufnahmeeinheit 19, welche zur Aufnahme einer Vielzahl von Auffangmitteln 21 dient. In die Halterung 24 ist eine Verstellvorrichtung 13 zum Verstellen der Halterung 24 sowie der Aufnahmeeinheit 19 integriert.

Bei dem dargestellten Ausführungsbeispiel ist die Halterung 24 in Form eines Haltearms ausgestaltet, welcher auf geeignete Art und Weise an dem Stativ oder dem Trägertisch 3 des in Figur 1 gezeigten Mikroskops 1 angebracht ist. Die Verstellvorrichtung 13 umfasst einen Schwenkantrieb 14 zum Verschwenken der Halterung 24 zwischen einer in Figur 2 dargestellten Arbeitsposition und einer in Figur 2 gestrichelt angedeuteten Bestückungsposition. In der Arbeitsposition befindet sich die Aufnahmeeinheit 19 mit den Auffangmitteln 21 zumindest teilweise oberhalb des auf dem Trägertisch 3 befindlichen Objektträgers, während in der Bestückungsposition die Aufnahmeeinheit 19 aus dem Lichtpfad des Mikroskops 1 sowie des Laserstrahls herausgeschwenkt ist, so dass einzelne Auffangmittel in die Aufnahmeeinheit 19 eingesetzt bzw. wieder davon entnommen werden können oder die Aufnahmeeinheit 19 ausgetauscht werden kann. Des weiteren ist ein Drehantrieb 15 zum Drehen der Aufnahmeeinheit 19 vorgesehen, um jeweils ein gewünschtes Auffangmittel in vordefinierter Position oberhalb des Objektträgers bzw. des Trägertisches 3 positionieren zu können. Der Schwenkantriebe 14 und der Drehantrieb 15 sind über den in Figur 1 gezeigten Computer 7 ansteuerbar.

Bei dem in Figur dargestellten Ausführungsbeispiel ist die Aufnahmeeinheit 19 in Form einer vorzugsweise kreisrunden Scheibe, beispielsweise aus Aluminium, ausgestaltet, welche in Umfangsrichtung verteilte und gleichmäßig beabstandete kreisrunde Öffnungen 20 aufweist. In jede dieser Öffnungen 20 kann ein geeignetes Auffangmittel 21 eingesetzt werden, welches ein Auffangen und Halten von aus der Objektebene herauskatapultierten biologischen oder nicht biologischen Objekten ermöglicht. Bei dem Auffangmittel 21 kann es sich - wie in Figur 2 gezeigt ist - insbesondere um die Kappe ("Cap") eines sogenannten Eppendorf- oder Mikrozentrifugenbehälters handeln, wobei die Kappe bei der in Figur 1 gezeigten Anordnung der Auffangvorrichtung 2 oberhalb des Trägertisches 3 mit ihrer Öffnung nach unten in die in Figur 2 dargestellte Aufnahmeeinheit 19 einzusetzen ist, so dass ein von der Objektebene bzw. dem Trägertisch 3 nach oben herauskatapultiertes Objekt an der Innenseite dieser Kappe 21 hängen bleibt. Zur Lagerung des somit aufgefangenen Objekts kann die Kappe 21 wieder auf den dazugehörigen Mikrozentrifugenbehälter gesteckt werden.

Die Aufnahmeeinheit 19 ist an der Halterung 24 auf geeignete Art und Weise vorzugsweise abnehmbar gehalten, so dass auf einfache Art und Weise die gesamte Aufnahmeeinheit 19 von der Halterung 24 gelöst werden kann. Die Kopplung der Halterung 24 und der Aufnahmeeinheit 19 kann beispielsweise pneumatisch, magnetisch oder mechanisch erfolgen, wobei die in Figur 2 gezeigte Aufnahmeeinheit 19 in ihrer Mitte an der Halterung 24 lös- oder abnehmbar angebracht ist.

Befindet sich die Halterung 24 mit der daran gehaltenen Aufnahmeeinheit 19 und den in der Aufnahmeeinheit 19 befindlichen Auffangmitteln 21 in der in Figur 2 dargestellten Arbeitsposition oberhalb des Trägertisches 3, kann durch geeignete Ansteuerung des Drehantriebs 15 ein gewünschtes Auffangmittel 21 über dem jeweils herauszukatapultierenden Objekt der auf dem Trägertisch 3 befindlichen biologischen Masse positioniert werden. Insbesondere ist durch die rechnergestützte Ansteuerung des Drehantriebs 15 in Kombination mit der rechnergestützten Ansteuerung des Trägertisches 3 möglich, dass nacheinander ein zuvor selektiertes biologisches oder nicht biologisches Objekt über dem Laserstrahl und entsprechend ein gewünschtes Auffangmittel 21 über dem in der Objektebene befindlichen herauszukatapultierenden Objekt positioniert wird. Durch anschließende vorzugsweise ebenfalls automatische Aktivierung des Lasers in Form eines kurzen Laserimpulses oder Laserschusses wird schließlich das zuvor selektierte Objekt aus der Objektebene in das darüber befindliche Auffangmittel katapultiert und dort gehalten. Auf diese Weise ist insbesondere ein vollautomatisches Herauskatapultieren einer Vielzahl von Objekten aus der aus dem Trägertisch 3 befindlichen biologischen Masse möglich, wobei nachjedem Katapultiervorgang derDrehantrieb 15 derart verstellt wird, dass jedes herauskatapultierte Objekt von einem anderen, rechnergestützt vorgegebenen Auffangmittel 21 aufgefangen und gehalten wird.

Zur Erfassung der augenblicklichen Position der Aufnahmeeinheit 19 ist in die Halterung 24 ein ebenfalls mit dem in Figur 1 gezeigten Computer 7 in Verbindung stehender Sensor 16 bzw. eine Sensorlogik integriert. Bei dem dargestellten Ausführungsbeispiel handelt es sich insbesondere um einen optischen Sensor 16, welcher auf der Aufnahmeeinheit 19 befindliche Markierungen 22 und 23 erfasst und auf diese Weise stets eindeutig die aktuelle Drehposition der Aufnahmeeinheit 19 feststellen und das augenblicklich oberhalb des herauszukatapultierenden Objekts befindliche Auffangmittel bzw. die entsprechend zugeordnete Öffnung 20 identifizieren kann. Im Prinzip genügt es, wenn die Aufnahmeeinheit 19 lediglich eine Markierung 22 aufweist, welche von dem Sensor 16 erfasst werden kann, wobei der Sensor 16 anschließend die Verstellbewegung des Drehantriebs 15 in Bezug auf diejenige Position, bei der sich die Markierung 22 gegenüber dem Sensor 16 befindet, erfasst und somit eindeutig auf die augenblickliche Drehposition der Aufnahmeeinheit 19 schließen kann.

Wurde von einem oberhalb des Objektträgers bzw. des Trägertisches 3 befindlichen Auffangmittel 21 ein aus der biologischen Masse herauskatapultiertes Objekt aufgefangen, ist es für viele Anwendungen sinnvoll, das herauskatapultierte Objekt mit Hilfe des in Figur 1 gezeigten Mikroskops 1 durch entsprechende Fokussierung des Mikroskops 1 auf das jeweilige Auffangmittel 21 zu beobachten. Um das in dem jeweiligen Auffangmittel 21 befindliche Objekt vollständig mit dem Mikroskop abfahren zu können, ist die zuvor erwähnte Verstellvorrichtung 13 derart ausgestaltet, dass in der zuvor erwähnten Arbeitsposition eine Verstellung des jeweiligen Auffangmittels 21 mit hoher Präzision in x- und y-Richtung möglich ist, so dass das in dem jeweiligen Auffangmittel 21 befindliche herauskatapultierte Objekt vollständig durch den Lichtpfad des Mikroskops 1 bewegt werden kann. Die Verstellung in x-Richtung erfolgt dabei mit Hilfe eines Stifts 18, der aus einer geeigneten und ebenfalls mit dem Computer 7 verbundenen Antriebseinheit 17 hervorsteht. Dieser Stift 18 dient einerseits als Anschlag für die Halterung 24 in der Arbeitsposition. Andererseits kann durch Verstellen des Stifts 18 in Pfeilrichtung die Halterung 24 und damit auch die Aufnahmeeinheit 19 mit dem zu beobachtenden Auffangmittel 21 mit hoher Präzision in x-Richtung verschoben werden. Ebenso ist denkbar, die Verstellung in x-Richtung über den Schwenkantrieb 14 vorzunehmen. Die Verstellung in y-Richtung kann hingegen über den Drehantrieb 15 realisiert werden, wobei durch geringfügiges Drehen der Aufnahmeeinheit 19 und damit des zu beobachtenden Auffangmittels 21 der mit dem Mikroskop 1 zu betrachtende Bereich auch in y-Richtung verschoben wird. Auf diese Weise können die ohnehin zur Verstellung der Halterung 24 vorgesehenen Antriebe 14 und/oder 15 zugleich zum Beobachten eines in einem Auffangmittel 21 befindlichen Objekts bzw. zum Abfahren des in dem Auffangmittel 21 befindlichen Objekts verwendet werden.

Nach einer zuvor beschriebenen Verstellung der Halterung 24 bzw. der daran gehaltenen Aufnahmeeinheit 19 mit dem darin befindlichen Auffangmittel 21 zur Beobachtung eines in dem Auffangmittel 21 befindlichen Objekts ist es häufig wünschenswert, dass nach dem Beobachten bzw. Abfahren des gefangenen Objekts wieder die ursprüngliche Position des Auffangmittels 21 eingenommen wird. Zu diesem Zweck ist eine Rückstellfunktion vorgesehen, welche die automatische Rückstellung in die ursprüngliche Position des Auffangmittels 21 bzw. der das Auffangmittel 21 aufweisenden Aufnahmeeinheit 19 und der Halterung 24 ermöglicht. Diese Rückstellfunktion kann dadurch realisiert sein, dass jedem Auffangmittel bzw. der entsprechenden Öffnung 20 der Aufnahmeeinheit 19 eine bestimmte Nullposition zugewiesen ist, welche insbesondere derjenigen Position entsprechen kann, in der sich das jeweilige Auffangmittel 21 mittig oberhalb des herauszukatapultierenden Objekts, d.h. auch in der Regel mittig oberhalb des Laserstrahls der Laservorrichtung 4, befindet. Diese Nullposition kann für jede Öffnung 20 bzw. für jedes Auffangmittel 21 in dem Computer 7 gespeichert sein. Nach einer Verstellung der Halterung 24 und der daran gehaltenen Aufnahmeeinheit 19 bzw. eines darin befindlichen Auffangmittels 21 zur Beobachtung eines in dem Auffangmittel 21 befindlichen Objekts kann diese Nullposition wieder abgerufen werden, so dass entsprechend die Antriebe 14, 15 und 17 angesteuert werden, um automatisch wieder die Nullposition des entsprechenden Auffangmittels 21 einzustellen.

Zum Auffangen mehrerer aus der biologischen Masse herauskatapultierter Objekte werden in der Regel die in den einzelnen Öffnungen 20 der Aufnahmeeinheit gehaltenen Auffangmittel 21 nacheinander im Uhrzeigersinn oder entgegen dem Uhrzeigersinn gedreht, so dass nacheinander jeweils ein anderes Auffangmittel 21 über dem jeweils herauszukatapultierenden Objekt positioniert wird. Zur Vereinfachung des Steueraufwands kann dabei vorgesehen sein, die für ein entsprechend der Drehrichtung der Aufnahmeeinheit 19 vorhergehendes Auffangmittel 21 ermittelte Nullposition auch für ein nachfolgendes Auffangmittel 21 zu verwenden. Im Prinzip genügt es grundsätzlich, die Nullposition lediglich für eine Öffnung 20 bzw. für ein Auffangmittel 21 zu definieren und zu speichern, wenn sich die einzelnen Öffnungen 20 und die darin gehaltenen Auffang mittel 21 wie in Figur 2 gezeigt in vordefinierter Lage zueinander befinden, da aus der vorgegebenen Nullposition eines Auffangmittels 21 auf eindeutige Art und Weise auch die Nullpositionen der anderen Auffangmittel 21 abgeleitet werden können.

Die in Figur 2 gezeigte Aufnahmeeinheit 19 kann besonders vorteilhaft in Form eines Einmalartikels ausgestaltet sein, wobei in diesem Fall die Aufnahmeeinheit 19 komplett mit mehreren Auffangmitteln 21 ("Caps") bestückt angeboten wird.

In Figur 3 ist eine weitere Auffangvorrichtung dargestellt, wobei als Auffangmittel die Vertiefungen ("Wells") 20 einer sogenannten Mikrotiterplatte 19 dienen. Bei der in Figur 3 gezeigten Auffangvorrichtung 2 handelt es sich insbesondere um eine Auffangvorrichtung, welche in Kombination mit einem aufrechten Mikroskop verwendet werden kann, wobei die Auffangvorrichtung 2 unterhalb des Trägertisches 3 bzw. der Objektebene positioniert wird und der Laserstrahl von oben den Objektträger trifft, um einzelne Objekte der auf der Unterseite des Objektträgers befindlichen biologischen Masse nach unten aus der Objektebene herauszukatapultieren. Ebenso ist diese Auffangvorrichtung 2 zum Auffangen einzelner biologischer oder nicht biologischer Objekte geeignet, welche allein aufgrund ihres Gewichts infolge der Schwerkraft nach Ausschneiden aus der biologischen Masse herunterfallen.

Bei der in Figur 3 gezeigten Auffangvorrichtungen ist die Halterung 24 stabförmig ausgestaltet und wird zusammen mit der davon gehaltenen Mikrotiterplatte 19 in Pfeilrichtung in x-und y-Richtung von einer geeigneten Verstellvorrichtung 13 verstellt. Die Verstellvorrichtung 13 wird wiederum rechnergestützt angesteuert und umfasst Komponenten, welche den Funktionen der in Figur 2 dargestellten Antriebe 14 und 15 sowie des Sensors bzw. der Sensorlogik 16 (zur Überwachung und Feststellung der augenblicklichen Position der Mikrotiterplatte 19) entsprechen. Auch bei dem in Figur 3 dargestellten Ausführungsbeispiel kann jede Öffnung 20, welche zugleich als Auffangmittel 21 dient, gezielt derart positioniert werden, dass ein aus der biologischen Masse herausgelöstes Objekt aufgefangen werden kann. In die Öffnungen 20 können auch geeignete Behälter, beispielsweise Mikrozentrifugenbehälter, eingesetzt sein, so dass ein aus der biologischen Masse herausgelöstes Objekt direkt in einen derartigen Behälter fällt.

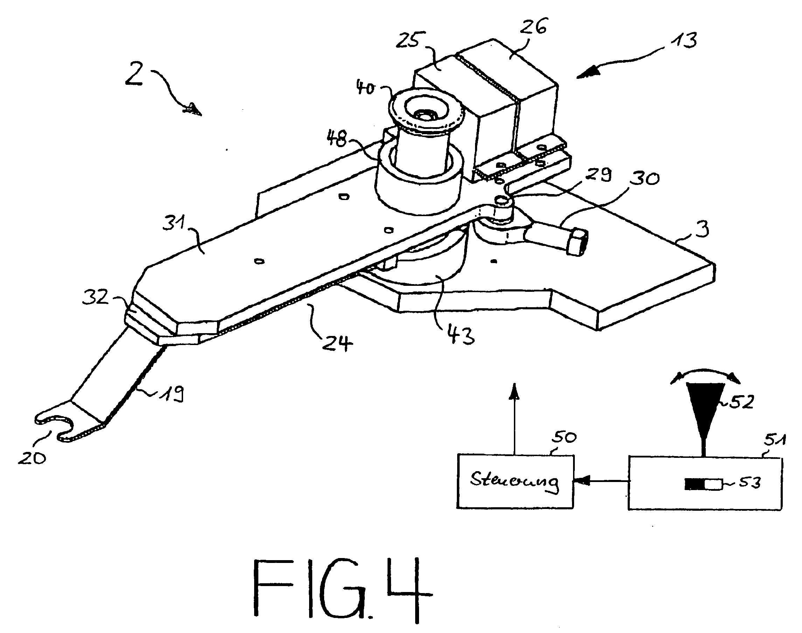

In den Figuren 4 - 6 ist eine weitere Auffangvorrichtung dargestellt. Dabei handelt es sich um eine Auffangvorrichtung 2, welche zur Positionierung lediglich eines Auffangmittels vorgesehen ist. Selbstverständlich kann diese Auffangvorrichtung jedoch auch derart abgewandelt werden, dass zugleich mehrere Auffangmittel gehalten und analog zu den Figuren 2 und 3 positioniert werden können.

zugleich mehrere Auffangmittel gehalten und analog zu den Figuren 2 und 3 positioniert werden können.

Bei der in den Figuren 4 - 6 dargestellten Auffangvorrichtung ist eine stegartige Aufnahmeeinheit 19 vorgesehen, welche an ihrem vorderen Ende eine Öffnung 20 besitzt, in die beispielsweise analog zu Figur 2 die Kappe ("Cap") eines Mikrozentrifugenbehälters eingesetzt werden kann. Die in den Figuren 4 - 6 dargestellte Auffangvorrichtung ist insbesondere gemäß Figur 1 zum Einsatz in einem sogenannten inversen Mikroskop ausgestaltet, wobei die Auffangvorrichtung 2 oberhalb des jeweiligen Trägertisches 3 des Mikroskops 1 auf geeignete Art und Weise befestigt ist. Demzufolge ist das jeweils verwendete Auffangmittel mit seiner Öffnung nach unten gerichtet in die Öffnung 20 der Aufnahmeeinheit 19 einzusetzen. Selbstverständlich lässt sich die in den Figuren 4 - 6 dargestellte Auffangvorrichtung auf einfache Art und Weise auch derart abwandeln, dass es für den Einsatz in aufrechten Mikroskopen 1 geeignet ist.

Die Halterung 24, welche zum Halten der Aufnahmeeinheit 19 mit dem darin befindlichen Auffangmittel vorgesehen ist, ist bei der dargestellten Auffangvorrichtung mehrteilig ausgestaltet. Die Aufnahmeeinheit 19 ist an einem ersten Halteteil 32 gehalten, welches wiederum an einem zweiten Halteteil 31 gehalten ist. Als Haltemittel werden jeweils Magnete 33 bzw. 35 mit einem entsprechenden Joch 34 bzw. 36 verwendet. Die Magnete 33 werden in Öffnungen 37 des ersten Halteteils 32 eingesetzt, wobei die Aufnahmeeinheit 19 zwischen dem ersten Halteteil 32 und dem Joch 34 positioniert wird. Mit Hilfe des Jochs 34 wird der magnetische Kreis geschlossen, so dass die Aufnahmeeinheit 19 mit Hilfe des Jochs 34 an dem ersten Halteteil 32 gehalten wird. Die Magnete 35 werden in Öffnungen 38 des ersten Halteteils 32 eingesetzt und entsprechend das Joch 36 daraufgesetzt, so dass wiederum ein magnetischer Kreis geschlossen wird. Die Magnete 33 und das Joch 34 sowie die Magnete 35 und das Joch 36 bzw. die jeweils dadurch gebildeten magnetischen Kreise ermöglichen, dass das erste Halteteil 32 mit der daran befindlichen Aufnahmeeinheit 19 allein mittels magnetischer Kräfte an der Unterseite des zweiten Halteteils 31 gehalten wird.

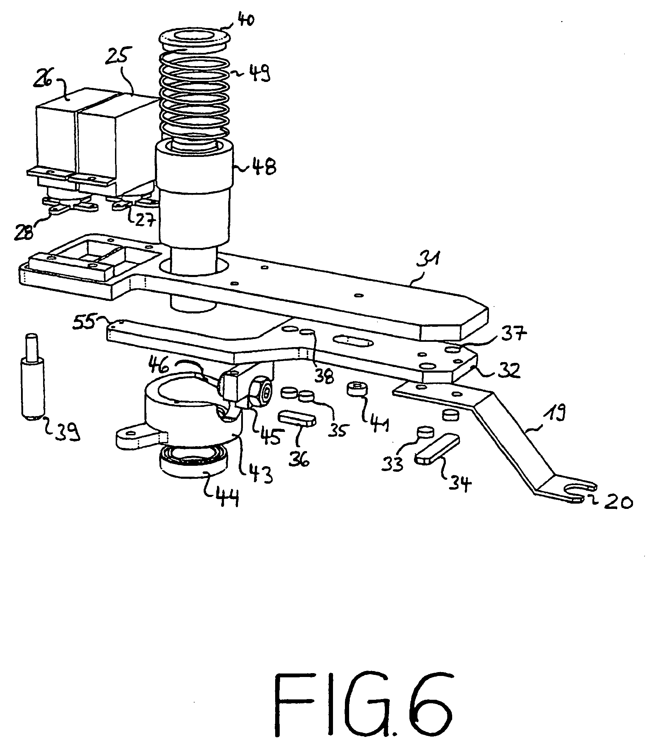

Am hinteren Ende des zweiten Halteteils 31 sind Servomotoren 25, 26 montiert, an deren Unterseite Antriebe 27 bzw. 28 hervorstehen. Diese Antriebe 27,28 sind über geeignete Mittel derart mit dem zweiten Halteteil 31 verbunden, dass beispielsweise mit Hilfe des Antriebs 27 eine Verstellung des zweiten Halteteils in x-Richtung und mit Hilfe des Antriebs 26 eine Verstellung des zweiten Halteteils 31 in y-Richtung möglich ist. In Figur 6 sind diesbezüglich lediglich beispielhaft Öffnungen 55 am hinteren Ende des ersten Halteteils 32 angedeutet, die z.B. über Drähte mit den beiden Antrieben 27 und 28 in Verbindung stehen.

Durch entsprechende Ansteuerung der Servomotoren 25 bzw. 26 kann somit das erste Halteteil 32 mit der daran befindlichen Aufnahmeeinheit 19 auf einfache Art und Weise aufgrund der zwischen den beiden Halteteilen 32 und 31 wirkenden magnetischen Lagerung gegenüber dem zweiten Halteteil 31 verschoben werden. An der Unterseite des zweiten Halteteils 31, welches beispielsweise wie das erste Halteteil 32 und die Aufnahmeeinheit 19 aus Eisen gefertigt sein kann, ist vorzugsweise eine Folie 54 (z.B. eine Teflonfolie) aufgebracht, welche ein möglichst reibungsfreies Verschieben des ersten Halteteils 32 gegenüber dem zweiten Halteteil 31 ermöglicht.

Des weiteren ist an der Unterseite des zweiten Halteteils 31 ein Vorsprung oder ein Stift 41 angebracht, welcher in ein in dem ersten Halteteil 32 ausgebildetes Langloch 42 hineinragt. Eine Verschiebung des ersten Halteteils 32 gegenüber dem zweiten Halteteil 31 ist somit nur innerhalb der durch das Langloch 42 definierten Grenzen möglich. Es ist jedoch ersichtlich, dass aufgrund der vorhandenen magnetischen Lagerung nicht nur eine Längsverschiebung des ersten Halteteils 32, sondern auch eine Drehung bzw. eine Querverschiebung des ersten Halteteils 32 gegenüber dem zweiten Halteteil 31 möglich ist, wobei in diesem Fall der Vorsprung 41 als Drehpunkt dient.

Die zuvor beschriebene magnetische Lagerung kann somit bei automatischer Ansteuerung der Servomotoren 25, 26 für die bereits erwähnte Suchfunktion verwendet werden, wenn sich in dem von der Aufnahmeeinheit 19 gehaltenen Auffangmittel ein aus der biologischen Masse herauskatapultiertes Objekt befindet, um dieses Objekt mit Hilfe des jeweils verwendeten Mikroskops genauer beobachten und abfahren zu können. Dabei ist aufgrund der gewählten Lagerungsart insbesondere eine spielfreie, hochpräzise Verstellung der Aufnahmeeinheit 19 bzw. des davon gehaltenen Auffangmittels möglich. Zudem gewährleistet die magnetische Lagerung, dass die gesamte Auffangvorrichtung äußerst flach realisiert werden kann.

Wie bereits erwähnt worden ist, können die Servomotoren 25 und 26, welche zur Verstellung des ersten Halteteils 32 mit der daran befindlichen Aufnahmeeinheit 19 gegenüber dem zweiten Halteteil 31 dienen, automatisch angesteuert werden. Dabei kann ein Eingabemittel verwendet werden, welches eine Eingabe eines Benutzers automatisch in entsprechende Steuersignale für die Servomotoren 25, 26 umsetzt. Dieses Eingabemittel ist insbesondere derart ausgestaltet, dass es eine Bewegung eines Benutzers erfasst und in die Steuersignale fürdie Servomotoren 25, 26 derart umsetzt, dass daraus eine Verstellung des ersten Halteteils 32 mit der daran befindlichen Aufnahmeeinheit 19 entsprechend der Bewegung des Benutzers erfolgt. Zu diesem Zweck bietet sich beispielsweise die Verwendung eines in Figur 4 gezeigten Joysticks 51 als Eingabemittel an, wobei die Verstellung des Hebels 52 dieses Joysticks 51 von einer Steuerung 50 automatisch in entsprechende Steuersignale für die Servomotoren 25, 26 umgesetzt wird.

Die Verwendung eines Joysticks 51 zur Verstellung des ersten Halteteils 32 und der daran gehaltenen Aufnahmeeinheit 19 ist auch insofern vorteilhaft, als dass der Hebel 52 bei herkömmlichen Joysticks durch geeignete interne Federmechanismen zu der in Figur 4 gezeigten Ausgangsposition des Hebels 52 hin vorgespannt ist. Dies bedeutet, dass bei einer Verstellung des Hebels 52 und späterem Loslassen des Hebels 52 automatisch der Hebel 52 wieder in seine Ursprungsposition zurückkehrt und von der Steuerung 50 die Servomotoren 25, 26 derart angesteuert werden, dass das erste Halteteil 32 ebenso entsprechend wieder in die Ursprungsposition zurückgestellt wird. Die in Figur 4 gezeigte Ausgangsposition des Hebels 52 kann somit als Nullposition für das erste Halteteil 32 bzw. für das von der Aufnahmeeinheit 19 gehaltene Auffangmittel angesehen werden, in die nach einer Verstellung des Auffangmittels bzw. der Aufnahmeeinheit 19 und des ersten Halteteils 32 automatisch eine entsprechende Rückstellung erfolgt. Dies ist aus den insbesondere anhand Figur 2 erläuterten Gründen vorteilhaft. Ist eine automatische Rückstellung in die Nullposition nicht gewünscht, kann diese mit Hilfe eines Schalters 53 deaktiviert werden, was beispielsweise zum Untersuchen bestimmter Merkmale des aufgefangenen Objekts, welche nur durch Verstellen der Aufnahmeeinheit 19 betrachtet werden können, sinnvoll ist.

Die zuvor beschriebenen Servomotoren 25, 26 dienen zur hochpräzisen Verstellung des ersten Halteteils 32 bzw. der daran gehaltenen Aufnahmeeinheit 19 in der Arbeitsposition der Auffangvorrichtung 2, d.h. wenn sich ein von der Aufnahmeeinheit 19 gehaltenes Auffangmittel oberhalb der Objektebene bzw. oberhalb des Laserstrahls befindet. Auch bei der in den Figuren 4 - 6 dargestellten Auffangvorrichtung kann die Auffangvorrichtung bzw. die Halterung 24 zwischen der Arbeitsposition und einer Bestückungsposition geschwenkt werden. In der Bestückungsposition kann ein geeignetes Auffangmittel in die Öffnung 20 der Aufnahmeeinheit 19 eingesetzt bzw. aus dieser Öffnung 20 entnommen oder die Aufnahmeeinheit 19 ausgetauscht werden, wobei sich das Auffangmittel in der Bestückungsposition außerhalb des Lichtpfads des Lasers und vorzugsweise auch außerhalb des Lichtpfads des Mikroskops 1 befindet. Der zum Schwenken der Halterung 24 verwendete Schwenkmechanismus soll nachfolgend näher erläutert werden.

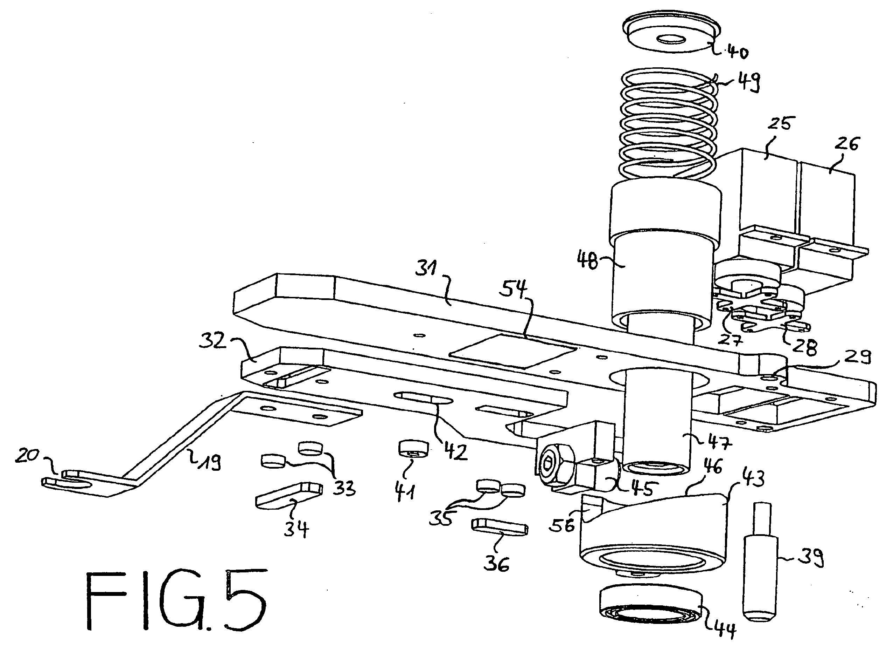

Wie insbesondere aus den Figuren 5 und 6 ersichtlich ist, ist an der Unterseite des ersten Halteteils 32 eine Rolle 45 befestigt, welche auf einer schräg verlaufenden Auflagefläche 46 eines Basisteils 43 gelagert ist. Eine Hülse 48 weist am unteren Ende einen Durchmesser auf, welcher derart bemessen ist, dass die Hülse durch eine entsprechende kreisförmige Öffnung in dem zweiten Halteteil 31 passt. Am oberen Ende weist die Hülse 48 einen weiteren Durchmesser auf, welcher insbesondere größer als der Durchmesser der kreisförmigen Öffnung des zweiten Halteteils 31 ist, so dass das obere Ende der Hülse 48 im zusammengebauten Zustand auf dem zweiten Halteteil 31 aufliegt (vgl. Figur 4). Durch die Hülse 48 ist ein kolbenförmiges Element 47 geführt, welches am oberen Ende mit einer Abdeckung 40 und am unteren Ende mit einer Abdeckung 44 abgeschlossen ist. In der Hülse 48 befindet sich eine Spiralfeder 49, welche die Hülse 48 nach unten, d.h. zu dem Basisteil 43 hin, vorspannt. Wie in Figur 4 gezeigt ist, kann an einer Öffnung 29 des zweiten Halteteils 31 ein entsprechender Schwenkmechanismus 30 angreifen, welcher beispielsweise ebenfalls mit Hilfe von rechnergestützten Servomotoren betrieben wird.

Es wird davon ausgegangen, dass sich die Auffangvorrichtung 2 bei der in Figur4 gezeigten Darstellung in ihrer Arbeitsposition befindet, so dass ein in der Öffnung 20 des Aufnahmeteils 19 gehaltenes Auffangmittel oberhalb der zu bearbeitenden biologischen Masse befindlich ist. Wird nunmehr auf den Schwenkmechanismus 30 eine entsprechende Kraft ausgeübt, wird das zweite Halteteil 31 und damit die gesamte Halterung 24 mit dem Aufnahmeteil und dem daran gehaltenen Auffangmittel entgegen den Uhrzeigersinn geschwenkt, bis die bereits erwähnte Bestückungsposition erreicht ist. Die Bestückungsposition kann beispielsweise durch einen Anschlag definiert sein, welcher hinsichtlich des hinteren Endes des zweiten Halteteils 31 vorgesehen ist. In Figur 5 und Figur 6 ist dieser Anschlag schematisch beispielhaft in Form eines Bolzens 39 angedeutet, der an dem zweiten Halteteil 31 angebracht ist.

Bei Schwenken der Halterung 24 mit dem Aufnahmeteil 19 entgegen den Uhrzeigersinn läuft zugleich die an der Unterseite des ersten Halteteils 32 befestigte Rolle 45 auf der schräg verlaufenden Auflagefläche 46 des Basisteils 43 nach oben, so dass nicht nur eine Schwenkbewegung stattfindet, sondern zugleich die gesamte Halterung 24 mit dem Aufnahmeteil 19, dem darin gehaltenen Auffangmittel und der in der in das zweite Halteteil 31 eingesetzten Hülse 48 gegen die Federkraft der Spiralfeder 49 nach oben angehoben wird. Die Bestückungsposition wird somit durch eine kombinierte Schwenk- und Hubbewegung eingenommen. Durch die Federkraft der Spiralfeder 49 ist die Hülse 48 und damit auch die gesamte Halterung 24 nach unten vorgespannt. Dies erleichtert eine Rückbewegung der Halterung 24 mit dem Aufnahmeteil 19 zurück in die Arbeitsposition. Die Arbeitsposition ist eindeutig durch einen in der Auflagefläche 46 des Basisteils 43 ausgebildeten Anschlag 56 für die Rolle 45 definiert (vgl. Figur 5). In der Arbeitsposition befindet sich das von der Aufnahmeeinheit 19 gehaltene Auffangmittel lediglich mit einem Abstand von ca. 0,5 - 10 mm über dem Objektträger bzw. dem Trägertisch 3.

Die Schwenkbewegung kann durch im Inneren der Hülse 48 und insbesondere zwischen der Innenseite der Hülse 48 und der Au-ßenseite des kolbenförmigen Elements 47 wirksame Kugellager oder dgl. unterstützt werden.

## Patentansprüche

1. Auffangvorrichtung zum Auffangen von mittels Laserbestrahlung aus einer auf einem Träger (3) befindlichen Masse herausgelösten Objekten,
mit einer Aufnahmeeinheit (19) zur Aufnahme eines Auffangmittels (21) zum Auffangen eines aus der Masse herausgelösten Objekts,
mit Haltemitteln (24) zum Halten der Aufnahmeeinheit (19), mit Verstellmitteln (13) zum Verstellen der Haltemittel (24), um somit die Aufnahmeeinheit (19) zu positionieren, und
mit Steuermitteln (7, 50) zum automatischen Erzeugen von Verstellsignalen für die Verstellmittel (13),
wobei die Verstellmittel (13) derart ausgestaltet sind, dass sie die Haltemittel (24) entsprechend den Verstellsignalen der Steuermittel (7, 50) automatisch verstellen,
**dadurch gekennzeichnet,**
**dass** die Aufnahmeeinheit (19) eine Vielzahl von Öffnungen (20) zur Aufnahme einer Vielzahl von Auffangmitteln (21) aufweist und von den Haltemitteln (24) abnehmbar ist, wobei die Auffangmittel (21) in die Öffnungen (20) eingesetzt und aus den Öffnungen (20) entnommen werden können, und
**dass** Erkennungsmittel (16) zum Erkennen der Lage der einzelnen Auffangmittel (21) in einer Arbeitsposition vorgesehen sind.

2. Auffangvorrichtung nach Anspruch 1,
**dadurch gekennzeichnet,**
**dass** die Verstellmittel (13) derart ausgestaltet sind, dass sie bei Vorliegen entsprechender Verstellsignale der Steuermittel (7) die Aufnahmeeinheit (19) von einer zum Anbringen der Aufnahmeeinheit (19) an der Auffangvorrichtung (2) oder zum Anbringen des Auffangmittels (21) an der Aufnahmeeinheit (19) vorgesehene Bestückungsposition in eine zum Auffangen eines aus der Masse herausgelösten Objekts dienenden Arbeitsposition oder umgekehrt bewegen, wobei insbesondere die Aufnahmeeinheit (19) in der Bestückungsposition in vertikaler Richtung von dem die Masse aufweisenden Träger (3) weiter beabstandet, insbesondere angehoben, ist als in der Arbeitsposition.

3. Auffangvorrichtung nach Anspruch 1 oder 2,
**dadurch gekennzeichnet,**
**dass** für das Auffangmittel (21) in einer zum Auffangen eines aus der Masse herausgelösten Objekts dienenden Arbeitsposition eine Nullstellung definiert ist, und
**dass** die Steuermittel (7, 50) derart ausgestaltet sind, dass sie nach einer Verstellung der Aufnahmeeinheit (19) mit dem davon gehaltenen Auffangmittel (21) aus der Nullstellung heraus durch entsprechende Ansteuerung der Verstellmittel (13, 17) eine automatische Rückstellung der Aufnahmeeinheit (19) mit dem davon gehaltenen Auffangmittel (21) in die Nullstellung herbeiführen.

4. Auffangvorrichtung nach einem der vorhergehenden Ansprüche,
**dadurch gekennzeichnet,**
**dass** die Aufnahmeeinheit (19) zur Aufnahme einer Vielzahl von Auffangmitteln (21) ausgestaltet ist, und
**dass** die Steuermittel (7) derart ausgestaltet sind, dass sie durch Erzeugung entsprechender Verstellsignale für die Verstellmittel (13) die Positionierung eines bestimmten Auffangmittels (21) zum Auffangen eines aus der Masse herausgelösten Objekts herbeiführen.

5. Auffangvorrichtung nach einem der vorhergehenden Ansprüche,
**dadurch gekennzeichnet,**
**dass** mehrere aus der Masse herauszulösende Objekte definiert sind, und
**dass** die Steuermittel (7) derart ausgestaltet sind, dass sie durch Erzeugung entsprechender Verstellsignale für die Verstellmittel (13) die Aufnahmeeinheit (19) automatisch derart verstellen, dass nacheinander verschiedene Auffangmittel (21) zum Auffangen jeweils eines vordefinierten, aus der Masse herausgelösten Objekts positioniert werden.

6. Auffangvorrichtung nach einem der vorhergehenden Ansprüche,
**dadurch gekennzeichnet,**
**dass** die Aufnahmeeinheit (19) mindestens eine Markierung (22, 23) aufweist, und
**dass** die Erkennungsmittel (16) derart ausgestaltet sind, dass sie durch Überwachung der Markierung (22, 23) auf die Lage der einzelnen Auffangmittel (21) in der Arbeitsposition schließen.

7. Auffangvorrichtung nach einem der vorhergehenden Ansprüche,
**dadurch gekennzeichnet,**
**dass** die Verstellmittel (13) eine erste Verstelleinrichtung (14) zum Schwenken der Aufnahmeeinheit (19) von einer Bestückungsposition in eine Arbeitsposition oder umgekehrt aufweisen, und
**dass** die Verstellmittel (13) eine zweite Verstelleinrichtung (15, 17, 25, 26) zum Verstellen der Aufnahmeeinheit (19) in der Arbeitsposition im Wesentlichen parallel zu der Ebene des Trägers (3) umfassen.

## Claims

1. Collecting apparatus for collecting objects which are released, by means of laser irradiation, from a mass which is located on a carrier (3),
having a collecting unit (19) for receiving a collecting means (21) for collecting an object which is released from the mass,
having holding means (24) for holding the collecting unit (19),
having adjustment means (13) for adjusting the holding means (24) in order in this way to position the collecting unit (19), and
having control means (7, 50) for automatic production of adjustment signals for the adjustment means (13),
wherein the adjustment means (13) are designed such that they automatically adjust the holding means (24) in accordance with the adjustment signals from the control means (7, 50),
**characterized**
**in that** the collecting unit (19) has a plurality of openings (20) to hold a plurality of collecting means (21) and is detachable from the holding means (24), wherein the collecting means (21) may be inserted into the openings (20) and may be removed from the openings (20), and
**in that** identification means (16) are provided, in order to identify the position of the individual collecting means (21) in a working position.

2. The collecting apparatus as claimed in claim 1,
**characterized**
**in that** the adjustment means (13) are designed such that when appropriate adjustment signals from the control means (7) are present they move the collecting unit (19) from a placement position which is intended for mounting the collecting unit (19) to the collecting apparatus (2) or for mounting the collecting means (21) to the collecting unit (19), to a working position which is used for collecting an object which is released from the mass, or vice versa, wherein in particular in the placement position, the collecting unit (19) is vertically further away, in particular raised, from the carrier (3) having the mass, than in the working position.

3. The collecting apparatus as claimed in claim 1 or 2,
**characterized**
**in that** a null position is defined for the collecting means (21) in a working position serving to collect an object which is released from the mass, and
**in that** the control means (7, 50) are designed such that, after adjustment of the collecting unit (19) together with the collecting means (21) held by it, from the null position, by means of appropriate actuation of the adjustment means (13, 17), they automatically reset the collecting unit (19) together with the collecting means (21) held by it to the null position.

4. The collecting apparatus as claimed in any one of the preceding claims,
**characterized**
**in that** the collecting unit (19) is designed to hold a plurality of collecting means (21), and
**in that** the control means (7) are designed such that, by producing appropriate adjustment signals for the adjustment means (13), they cause the positioning of a specific collecting means (21) in order to collect an object which is released from the mass.

5. The collecting apparatus as claimed in any one of the preceding claims,
**characterized**
**in that** a number of objects which are to be released from the mass are defined, and in that the control means (7) are designed such that, by producing appropriate adjustment signals for the adjustment means (31), they automatically adjust the collecting unit (19) such that different collecting means (21) are positioned successively in order to collect a respectively predefined object which is released from the mass.

6. The collecting apparatus as claimed in any one of the preceding claims,
**characterized**
**in that** the collecting unit (19) has at least one marking (22, 23), and
**in that** the identification means (16) are designed such that, by monitoring the marking (22, 23), they deduce the position of the individual collecting means (21) in the working position.

7. The collecting apparatus as claimed in any one of the preceding claims,
**characterized**
**in that** the adjustment means (13) have a first adjustment device (14) for pivoting the collecting unit (19) from a placement position to a working position, or vice versa, and
**in that** the adjustment means (13) have a second adjustment device (15, 17, 25, 26), in order to adjust the holding unit (19) in the working position essentially parallel to the plane of the carrier (3).

## Revendications

1. Dispositif collecteur pour recueillir des objets dissous à partir d'une masse se trouvant sur un support (3), en utilisant un rayonnement laser,
- avec une unité support (19), pour supporter un moyen de collecte (21) pour collecter un objet extrait de la masse,
- avec des moyens de maintien (24), pour maintenir l'unité support (19) avec des moyens de réglage (13) pour régler les moyens de maintien (24), pour ainsi positionner l'unité support (19), et avec les moyens de commande (7, 50) pour produire automatiquement des signaux de réglage pour les moyens de réglage (13),
- les moyens de réglage (13) étant réalisés de manière qu'ils règlent automatiquement les moyens de maintien (24) de manière correspondante aux signaux de réglage des moyens de commande (7, 50),
**caractérisé en ce que**
l'unité support (19) présente une pluralité d'ouvertures (20) pour recevoir une pluralité de moyens de collecte (21), et est susceptible d'être démontée des moyens de maintien (24), de sorte que les moyens de collecte (21) puissent être introduits dans les ouvertures (20) et puissent être retirés des ouvertures (20), et
des moyens d'identification (16) sont prévus pour identifier la position des moyens de collecte individuels (21) en une position de travail.

2. Dispositif de collecte selon la revendication 1,
**caractérisé en ce que**
les moyens de réglage (13) sont réalisés de manière que, en cas de présence de signaux de réglage correspondants des moyens de commande (7), ils déplacent l'unité support (19) d'une position d'équipement prévue pour monter l'unité support (19) sur le dispositif de collecte (2) ou pour monter des moyens de collecte (21) sur l'unité support (19), en une position de travail servant à la collecte d'un objet extrait de la masse ou inversement, où en particulier l'unité support (19), à la position d'équipement, est espacée en direction verticale vis-à-vis du support (3) présentant à la masse, en particulier levée, à la position de travail.

3. Dispositif de collecte selon la revendication 1 ou 2,
**caractérisé en ce que**
pour le moyen de collecte (21), en une position de travail servant à la collecte d'un objet extrait de la masse, est définie une position neutre, et **en ce que** les moyens de commande (7, 50) sont réalisés de manière qu'après un réglage de l'unité support (19) avec le moyen de collecte (21) maintenu par lui, depuis la position neutre, au moyen d'une commande correspondante des moyens de réglage (13, 17), ils provoquent une rétraction automatique de l'unité support (19) avec les moyens de collecte (21) maintenus par elle, à la position neutre.

4. Dispositif de collecte selon l'une des revendications précédentes, **caractérisé en ce que**
l'unité support (19) est réalisée pour supporter une pluralité de moyens de collecte (21), et **en ce que** les moyens de commande (7) sont réalisés de manière que par production de signaux de réglage correspondants pour les moyens de réglage (13), ils provoquent le positionnement d'un moyen de collecte (21) déterminé pour collecter un objet à extraire de la masse.

5. Dispositif de collecte selon l'une des revendications précédentes, **caractérisé en ce que** plusieurs objets à extraire de la masse sont définis, et **en ce que** les moyens de commande (7) sont réalisés de manière que, par production de signaux de réglage correspondants pour les moyens de réglage (13), ils règlent automatiquement l'unité support (19) de manière que des moyens de collecte (21), différents les uns des autres, soient positionnés pour collecter chaque fois un objet prédéfini extrait de la masse.

6. Dispositif de collecte selon l'une des revendications précédentes, **caractérisé en ce que** l'unité support (19) présente au moins un marquage (22, 23) et **en ce que** les moyens d'identification (16) sont réalisés, de manière que, par surveillance du marquage (22, 23), ils tirent une conclusion au sujet de la position des différents moyens de collecte (21) à la position de travail.

7. Dispositif de collecte selon l'une des revendications précédentes, **caractérisé en ce que** les moyens de réglage (13) présentent un premier dispositif de réglage (14) pour le pivotement de l'unité support (19), d'une position d'équipement en une position de travail, ou inversement, et **en ce que** les moyens de réglage (13) comprennent un deuxième dispositif de réglage (15, 17, 25, 26), pour le réglage de l'unité support (19) à la position de travail, sensiblement parallèlement au plan du support (3).
